# EUROPEAN PATENT APPLICATION

(11) **EP 1 595 826 A1**
(43) Date of publication of application: **16.11.2005**
(21) Application number: 03786273.7
(22) Date of filing: 24.12.2003
(51) Int. Cl.: B65G 47/40, B65G 17/16, B60R 21/26, B09B 3/00

(54) **AUTOMATIC INFLATOR CHARGING SYSTEM**

(30) Priority: 26.12.2002 JP 2002376021; 20.03.2003 JP 2003077051
(71) Applicant: DAICEL CHEMICAL INDUSTRIES, LTD., Sakai-shi, Osaka 590-8501 (JP)
(72) Inventor: AOYAMA, Keishi, Tatsuno-shi, Hyogo 679-4134 (JP); NAKAZAWA, Yuji, Kako-gun, Hyogo 675-0151 (JP)
(74) Representative: Grünecker, Kinkeldey, Stockmair & Schwanhäusser Anwaltssozietät
(86) International application number: PCT/JP2003/016609
(87) International publication number: WO 2004/058606

(57) **Abstract**

The present invention provides an automatic charging system of inflators into the thermally treating tower.

The inflators 40 are conveyed inside a tubular passage 10 by a bucket 12 in an inflator conveying and discharging apparatus, and they are discharged into a first vertical passage 51 of an inflator charging apparatus. The inflators 40 are charged into a thermally treating tower 100 via a flat passage 53 and a second vertical passage 52.

## Description

### Technical Field where the Invention belongs

The present invention relates to an inflator charging apparatus used when inflators for an air bag are charged into a thermally treating tower, and an automatic charging system of inflators into a thermally treating tower using the inflator charging apparatus.

### Background Art

Recently, since new cars equipped with an air bag (s) has increased, a great deal of inflators accommodating gas generating materials therein will hereafter are seen at scrapping of these cars equipped with air bags. Therefore, from the viewpoint of safety and effective utilization of resources, it is necessary to ignite the gas generating materials by thermal treatment safely to recover metals and the like therefrom. Under such circumstances, a recovery/treatment system for inflators for an air bag is being started.

For treatment of inflators for an air bag, a method in which thermal treatment is conducted to inflators for an air bag inside a thermally treating tower and a gas generating materials in the inflators are ignited by a high-temperature treatment. Then, a combustion gas generated from the treatment of the gas generating materials is exhausted from an exhaust gas tube connected to the thermally treating tower.

When inflators which are treatment subjects are charged into the thermally treating tower, it is desirable to conduct charging by a mechanical means, because it is troublesome to conduct charging manually, which results in reduction of workability, and the manual charging is also high in danger. Further, even when the mechanical means is adopted, it is desirable to conduct continuous charging in a proper lot according to the treating capacity of the thermally treating tower.

As a conventional technique relating to this invention, JP-A 11-101422 is listed.

### Disclosure of the Invention

An object of the present invention is to provide an inflator conveying and discharging apparatus and an inflator charging apparatus where charging of inflators can be performed into a thermally treating tower safely and stably, and an automatic charging system of inflators into the thermally treating tower using the same.

As a solving means of the above problem, the invention described in Claim 1 provides an inflator conveying and discharging apparatus which constitutes a system which charges inflators for an air bag into a thermally treating tower, for treating the inflators inside the thermally treating tower, wherein an inflator conveying and discharging apparatus comprises at least a tubular passage, a bucket which can be ascended and descended inside the tubular passage and can receive a predetermined lot of inflators therein, and a discharging means for discharging the inflators in the bucket by tilting the bucket at a predetermined position.

It is desirable that a guide rail for moving the bucket is provided inside the tubular passage, a guide roller for moving on the guide rail is provided to the bucket, the bucket is ascended or descended by actuation of a chain connected to a driving apparatus, and the bucket is tilted at the predetermined position so that the inflators are discharged.

According to such an inflator conveying and discharging apparatus, conveying and discharging of inflators can be performed safely and stably without a worker's direct participation by putting a predetermined lot of inflators in the bucket to move the bucket inside the tubular passage.

As another solving means of the above problems, the invention described in Claim 3 provides an inflator charging apparatus which constitutes a system which, for treating inflators for an air bag into a thermally treating tower, charges the inflators to the thermally treating tower, wherein the inflator charging apparatus comprises:
a tubular passage connected to the thermally treating tower, and opening/closing means for opening/closing the tubular passage which are provided at least two positions inside the tubular passage.

When there are two opening/closing means for opening/closing the tubular passage, it is desirable to make such a setting that, while one opening/closing means is opened, the other opening/closing means is closed, but while one opening/closing means is closed, the other opening/closing means is closed.

It is preferable that the tubular passage comprises a combination of a non-flat passage and a flat passage, the non-flat passage preceding to the flat passage and the non-flat passage continuous to the flat passage are each provided with at least one opening/closing means, and a moving means for moving an inflator (s) stayed in the flat passage to the non-flat passage is further provided.

The non-flat passage means an inclined passage or a vertical passage such that an inflator falls naturally or moves naturally, while the flat passage means such a passage that an inflator neither falls naturally nor moves naturally. Therefore, a passage having such an inclination that an inflator neither falls naturally nor moves naturally is included in the flat passage. A reference surface to the inclination is an installation surface of an apparatus.

When the opening/closing means are provided at least two positions in this manner, heat inside the thermally treating tower is prevented from entering the tubular passage so that a gas generating material accommodated in an inflator is not ignited and burnt inside the tubular passage.

The invention described in Claim 6 provides an automatic charging system of inflators for an air bag into a thermally treating tower where an inflator conveying and discharging apparatus according to claim 1 or 2 and an inflator charging apparatus according to any one of claims 3 to 5 are related and combined such that the inflators can be charged in the thermally treating tower, wherein
the combination of the respective apparatuses is such a combination that, after inflators are supplied to a bucket which the inflator conveying and discharging apparatus have by a manual means or a mechanical means, the inflators charged in the bucket are conveyed and the inflators are discharged in the tubular passage of the inflator charging apparatus; and
the inflators discharged in the tubular passage of the inflator charging apparatus are charged into the thermally treating tower.

A portion of the tubular passage positioned in the vicinity of an upper end portion thereof in the inflator conveying and discharging apparatus and a portion of the tubular passage positioned in the vicinity of an upper end portion thereof in the inflator charging apparatus may be connected to each other, or the tubular passage in the inflator conveying and discharging apparatus and the tubular passage in the inflator charging apparatus may be formed as a united passage.

By combining the inflator conveying and discharging apparatus and the inflator charging apparatus, charging of inflators can be conducted safely and stably without a worker's direct participation.

The inflators for an air bag which are treatment subjects in this invention includes all inflators required to be treated from various reasons, for example, failure products which may occur during a manufacturing process, returned products from an automobile manufacturer or a module manufacturer, a stocked product remaining after manufacture is stopped, and inflators removed from scrapped cars.

According to the automatic charging system of inflators to a thermally treating tower, inflators can be continuously charged into a thermally treating tower safely and stably.

### Brief Description of the Drawings

Fig. 1 is a conceptual diagram of an automatic charging system of inflators into a thermally treating tower; and
Fig. 2 is a conceptual diagram of a thermal treatment equipment for inflators including the automatic charging system of inflators into a thermally treating tower.

### Explanation of Numerals

- 10: tubular passage
- 12a to 12d: bucket
- 40: inflator
- 51: first vertical passage
- 52: second vertical passage
- 53: flat passage

### Preferred Embodiment of the Invention

### (1) Embodiment 1

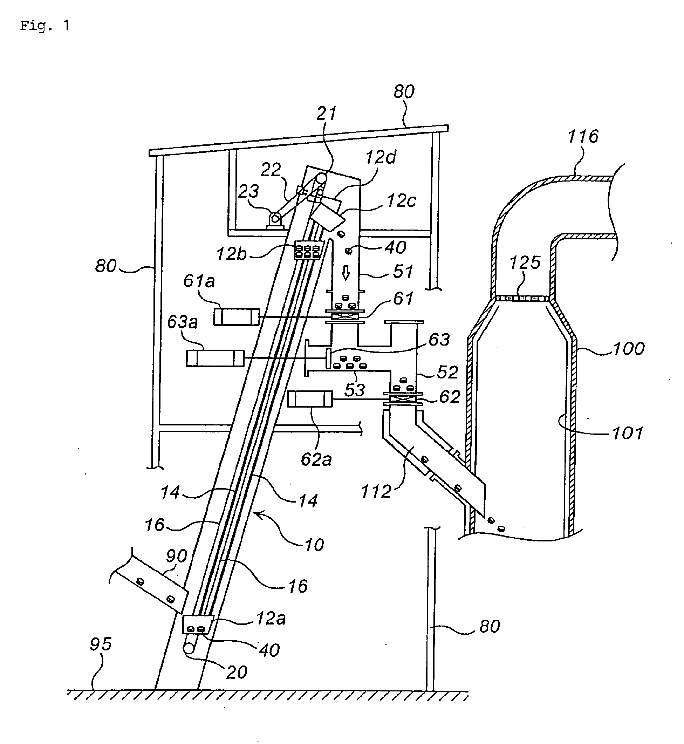

An inflator conveying and discharging apparatus will be explained with reference to Fig. 1. Fig. 1 is a conceptual diagram of an automatic charging system of inflators into a thermally treating tower combined with an inflator conveying and discharging apparatus.

A tubular passage 10 is installed to be inclined to an installation surface 95 by a supporting structure 80 formed by combining plural elongated members. An inclination angle of the tubular passage 10 to the installation surface 95 is determined considering an available space and volume in an installation place and the like.

An inflator supplying port 90 is connected to a lower end side of the tubular passage 10. Since the inflator supplying port 90 is positioned at a lower place, far from a thermally treating tower 100, which can ensure safety, supplying of inflators 40 into the inflator supplying port 90 can be conducted manually, and the supplying can be performed with a combination with a belt conveyor or the like, as occasion demands.

One bucket 12 is disposed inside the tubular passage 10. The bucket 12 can be movable from a lower end position at which supply of inflators 40 can be received from the inflator supplying port 90 to an upper end position (the numeral 12d in the drawing) of the tubular passage 10. In Fig. 1, a moving state of one bucket 12 is divisionally shown with the numerals 12a to 12d.

Four guide rails 14 along which the bucket 12 moves are provided inside the tubular passage 10, where two guide rails 14 of the four guide rails are provided on the side of one side surface of the bucket 14 while the two remaining guide rails 14 (not shown) are provided on the side of the other side surface of the bucket 14.

Guide rollers (not shown) for allowing the bucket 12 to move on the guide rails 14 are provided on both side surfaces of the bucket 12.

A winding-up chain 16 is connected to a bottom portion of the bucket 12, and the winding-up chain 16 is spanned between a lower end gear wheel 20 and an upper end gear wheel 21. The upper end gear wheel 21 is connected to a driving apparatus 23 via a driving chain 22.

The size and shape of the bucket 12 are not limited to specific ones, but the size or the inner shape of the bucket 12 can be properly set according to the size and shape of inflators which are the treatment subjects and further a treatment efficiency and the like. The size of the bucket 12 can have, for example, a size in which at most 60 inflators or so are received, but it may have one exceeding the size.

Next, an operation of the inflator conveying and discharging apparatus will be explained with reference to Fig. 1. The bucket 12a is positioned at the lower end of the tubular passage 10. Next, a predetermined number of inflators 40 are supplied from the inflator supplying port 90 into the bucket 12a.

Thereafter, the driving apparatus 23 is operated to rotate the upper end gear wheel 21 according to action of the driving chain 22. The lower end gear wheel 20 starts rotation according to the rotation of the upper end gear wheel 21, and the winding-up chain 16 spanned between both the gear wheels starts circulation. The bucket 12 ascends inside the tubular passage 10 along the guide rails 14 according to the circulation of the winding-up chain 16, and it reaches a stop position indicated by the numeral 12c via the positions indicated by the numerals 12a and 12b.

At the stop position indicated by numeral 12c, two guide rails of the four guide rails 14, which are positioned on the side of the first vertical passage 51, are turned in the direction of the first vertical passage 51. The other two guide rails 14 do not have turned portions and they further extend upwardly. For this reason, the bottom portion of the bucket 12 connected to the winding-up chain 16 is lifted up to a stopper portion (not shown) provided at the uppermost position. On the other hand, since a bucket upper portion connected to the guide rollers inside the turned portions of the guide rails 14 moves along the turned portions of the guide rails 14, the bucket 12 tiles. The position of the stopper portion and the turned portions of the guide rails 14 are set such that the bucket 12 tiles at an angle of 90° (a state indicated by the numeral 12d) and all the inflators 40 in the bucket 12 are discharged. For this reason, the bucket 12 is tilted as indicated by the numerals 12c and 12d and it finally discharges the inflators 40 in the bucket 12.

Thereafter, the bucket 12 is returned back to the position indicated by the numeral 12a again by circulating the winding-up chain 16 in the reverse direction in the reversed order from the ascending time, namely, via the states indicated by the numerals 12d, 12c and 12b, and similar operation is repeated.

By using such an inflator conveying and discharging apparatus, a worker is not required to work at a place which is high or is positioned in the vicinity of the thermally treating tower, so that stable conveying and discharging of inflators can be always performed.

### (2) Embodiment 2

An inflator charging apparatus will be explained with reference to Fig. 1. The inflator charging apparatus comprises a combination of the tubular passage and the opening/closing means.

The tubular passage comprises a combination of a first vertical passage 51, a flat passage 53 and a second vertical passage 52, and one end of the second vertical passage 52 is connected to the thermally treating tower 100 (the inflator charging port 112) . The first and second vertical passages 51 and 52 may be such an inclined passage that inflators 40 can move naturally.

A first opening/closing means 61 is provided between the first vertical passage 51 and the flat passage 53, so that the passage can be opened or closed. The first opening/closing means 61 is opened and closed by a seal valve (a slide gate valve) 61a.

A second opening/closing means 62 is provided between the flat passage 53 and the second vertical passage 52, so that the passage can be opened or closed. The second opening/closing means 62 can be opened and closed by a seal valve 62a.

The first opening/closing means 61 and the second opening/closing means 62 are set to be related to each other regarding the opening state and the closed state thereof such that when one of these means is put in an opened state, the other is put in a closed state.

A moving means 63 for moving the inflator(s) 40 staying in the flat passage 53 to the second vertical passage 52 is provided in the flat passage 53. The moving means 63 makes the inflator(s) 40 staying in the flat passage 53 fall into the second vertical passage 52 by forward and rearward movements conducted by a charging pusher 63a.

Next, an operation of the inflator charging apparatus will be explained with reference to Fig. 1. The inflators 40 discharged inside the first vertical passage 51 stay therein since the first opening/closing means 61 is put in a closed state.

Thereafter, when the first opening/closing means 61 is opened, the inflators fall down to the flat passage 53 and they stay therein. Such a constitution can be employed that the first opening/closing means 61 is maintained in the opened state at this time so that the inflators fall down to the flat passage 53 at a stroke. However, since an impact due to falling is large and malfunction of the inflator(s) 40 may occur, it is preferable that the inflators 40 are once stayed at the position of the first opening/closing means 61. Incidentally, after the inflators 40 are fallen down to the flat passage 53, the opening/closing means 61 is closed.

Thereafter, the inflators 40 staying in the flat passage 53 are fallen down in the second vertical passage 52 by the moving means 63. At this time, the second opening/closing means 62 may be put in an opened state. However, it is desirable that the second opening/closing means 62 is put in a closed state such that the inflator(s) 40 is not activated erroneously due to reception of heat from the thermally treating tower 100.

Thereafter, the second opening/closing means 62 is opened to charge the inflators 40 into the thermally treating tower 100. Then, such a series of operations are repeated.

In the inflator charging apparatus, such a constitution can be employed that only the first and second vertical passages (or the inclined passage) are provided without the flat passage and two opening/closing means are arranged. However, from the viewpoint of relaxation of an impact due to falling-down of the inflators 40, it is desirable to employ a combination of the first vertical passage 51, the flat passage 53 and the second vertical passage 52.

The opening/closing states of the first opening/closing means 61 and the second opening/closing means 62 may be adjusted such that the inflators 40 inside the first vertical passage 51, the flat passage 53 and the second vertical passage 52 do not activate erroneously due to heat from the thermally treating tower 100.

### (3) Embodiment 3

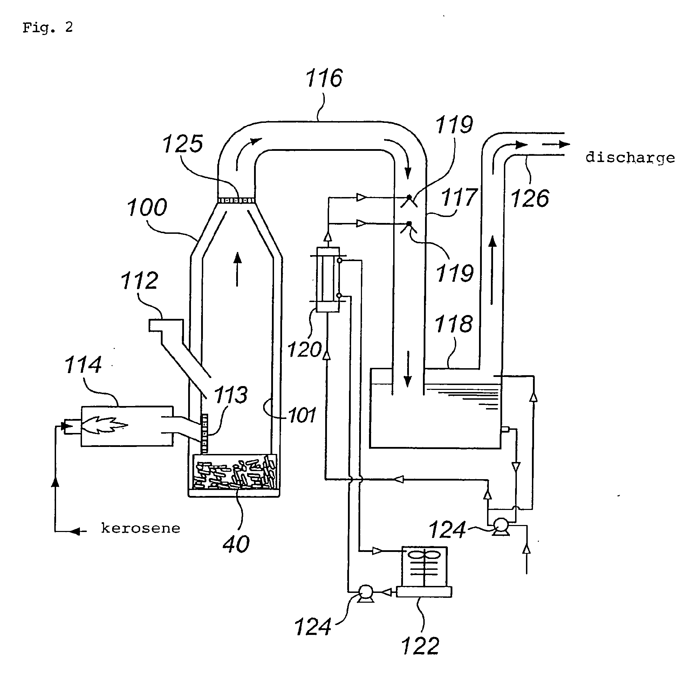

An automatic charging system of inflators into a thermally treating tower will be explained with reference to Fig. 1 and Fig. 2. Fig. 2 is a conceptual diagram of an inflator thermal treatment equipment including the automatic charging system of inflators into a thermally treating tower, which is shown in Fig. 1.

The automatic charging system of inflators into the thermally treating tower is constituted by combining the inflator conveying and discharging apparatus of Embodiment 1 and the inflator charging apparatus of Embodiment 2.

The upper end portion of the tubular passage 10 in the inflator conveying and discharging apparatus and an end portion of the first vertical passage 51 in the inflator charging apparatus are connected to be united as shown in Fig. 1.

An end portion of the second vertical passage 52 of the inflator charging apparatus is connected to an inflator charging port 112 as shown in Fig. 2.

The inflators 40 conveyed by the inflator conveying and discharging apparatus are discharged into the first vertical passage 51 of the inflator charging apparatus by tilting the bucket to the state shown with 12d. The inflators 40 discharged into the first vertical passage 51 are finally charged into the thermally treating tower 100.

A combustion furnace 114 for heating and temperature-raising the interior of the thermally treating tower 100 is attached with the thermally treating tower 100 and kerosene is supplied thereto as a fuel. A partition means 113 functioning in the same manner as the partition means 125 is provided at an inlet of the combustion furnace 114.

An exhaust gas tube 116 for exhausting a gas generated inside the thermally treating tower 100 is connected to an upper opening portion of the thermally treating tower 100. A partition means which allows ventilation (for example, a wire mesh, a punching metal, or a grating made of such as a metal as iron) 125 is provided between the thermally treating tower 100 and the exhaust gas tube 116. The partition means 125 is removably mounted at a peripheral edge portion thereof and a flange portion (not shown) provided on an inner wall surface of the thermally treating tower 110 or an inner wall surface of the exhaust gas tube 116 by a bolt and a nut.

A distal end of the exhaust gas tube 116 is connected to a cooling tower tank 118, and a gas passing through the interior of the exhaust gas tube 116 is introduced into a water inside the cooling tower tank 118. The numeral 120 denotes a heat exchanger, the numeral 122 denotes a cooling tower, and the numeral 124 denotes a pump. Incidentally, a metal partition wall 101 functioning in the same manner as one disclosed in Fig. 1 in JP-A 11-101422 (a protecting function of an inner wall of the thermally treating tower 100) can be provided inside the thermally treating tower 100.

Inflators 40 charged into the thermally treating tower 100 are heated at a temperature equal to or higher than an ignition temperature of gas generating materials accommodated in the inflators 40 to burn the gas generating materials. A combustion gas is exhausted from the exhaust gas tube 116 and washed and cooled by a water spray 119 of the cooling and washing tower 117 to be discharged from a gas discharging tube 126 to the atmosphere via the cooling tower tank 118.

Incidentally, since supply of inflators 40 to the inflator conveying and discharging apparatus is performed at a low place and with a high safety, the inflators can be supplied manually using a belt conveyor or the like, as needed.

## Claims

1. An inflator conveying and discharging apparatus which constitutes a system for charging inflators for an air bag into a thermally treating tower, for treating the inflators inside the thermally treating tower, wherein the inflator conveying and discharging apparatus comprising at least:
a tubular passage, a bucket which can be ascended and descended inside the tubular passage and can receive a predetermined lot of inflators therein, and a discharging means for discharging the inflators inside the bucket by tilting the bucket at a predetermined position.

2. An inflator conveying and discharging apparatus according to claim 1, wherein a guide rail for moving the bucket is provided inside the tubular passage, a guide roller for allowing the bucket to move on the guide rail is attached with the bucket, the bucket is ascended or descended according to activation of a chain connected to a driving apparatus, and the bucket is tilted at the predetermined position so that the inflators are discharged.

3. An inflator charging apparatus which constitutes a system for charging inflators for an air bag into a thermally treating tower, for treating the inflators inside the thermally treating tower, wherein the inflator charging apparatus comprises:
a tubular passage connected to the thermally treating tower, and opening/closing means for opening/closing the tubular passage, which are provided at least two positions inside the tubular passage.

4. An inflator charging apparatus according to claim 3, wherein, when there are two opening/closing means for opening/closing the tubular passage, while one opening/closing means is opened, the other opening/closing means is closed, and while one opening/closing means is closed, the other opening/closing means is closed.

5. An inflator charging apparatus according to claim 3 or 4, wherein the tubular passage comprises a combination of a non-flat passage and a flat passage, the non-flat passage before the flat passage and the non-flat passage after the flat passage are each provided with at least one opening/closing means, and a moving means for moving the inflator stayed in the flat passage to the non-flat passage.

6. An automatic charging system of inflators for an air bag into a thermally treating tower, where an inflator conveying and discharging apparatus according to claim 1 or 2 and an inflator charging apparatus according to any one of claims 3 to 5 are related and combined to each other to allow inflators to be charged into the thermally treating tower, wherein
a combination of respective apparatuses is such a combination that, after inflators are supplied into the bucket which the inflator conveying and discharging apparatus have manually or by a mechanical means, the inflators charged into the bucket are conveyed and the inflators are further discharged into the tubular passage of the inflator charging apparatus, and
the inflators discharged into the tubular passage of the inflator charging apparatus are charged into the thermally treating tower.

7. An automatic charging system of inflators into a thermally treating tower according to claim 6, wherein a portion of the tubular passage positioned in the vicinity of an upper end portion thereof in the inflator conveying and discharging apparatus and a portion of the tubular passage positioned in the vicinity of at an upper end portion thereof in the inflator charging apparatus are connected to each other, or the tubular passage in the inflator conveying and discharging apparatus and the tubular passage in the inflator charging apparatus constitute a united passage.
